# EUROPEAN PATENT SPECIFICATION

(11) **EP 4 092 597 B1**
(45) Date of publication and mention of the grant of the patent: **01.11.2023**
(21) Application number: 21174291.1
(22) Date of filing: 18.05.2021
(51) Int. Cl.: G06Q 20/34, G06Q 20/38, G07F 7/08, G06F 21/62, G06F 21/64, G06F 21/72, H04L 9/08, H04L 9/32

(54) **PORTABLE DEVICE FOR THE EXCHANGE, TRANSFER AND TRANSPORT OF SENSITIVE DIGITAL INFORMATION**
TRAGBARES GERÄT ZUM AUSTAUSCHEN, ÜBERTRAGEN UND TRANSPORTIEREN VON SENSIBLEN DIGITALEN INFORMATIONEN
APPAREIL PORTABLE POUR L'ÉCHANGE, LE TRANSFERT ET LE TRANSPORT D'INFORMATIONS NUMÉRIQUES SENSIBLES

(43) Date of publication of application: 23.11.2022
(73) Proprietor: Knobs S.r.l., 20121 Milano (MI) (IT)
(72) Inventor: BIANCHI, Mattia, 20121 Milano (MI) (IT); BRUSCHI, Francesco, 20121 Milano (MI) (IT); MOLINARI, Mauro, 20121 Milano (MI) (IT); RANA, Vincenzo, 20121 Milano (MI) (IT); TUMIATI, Manuel, 20121 Milano (MI) (IT)
(74) Representative: Grana, Daniele

(56) References cited:
- WO-A1-2020/110079
- US-A1- 2020 366 483
- AZMAN MOHAMED ET AL: "HCH DEX: A Secure Cryptocurrency e-Wallet & Exchange System with Two-way Authentication*", 2020 THIRD INTERNATIONAL CONFERENCE ON SMART SYSTEMS AND INVENTIVE TECHNOLOGY (ICSSIT), IEEE, 20 August 2020 (2020-08-20), pages 305-310, XP033834925, DOI: 10.1109/ICSSIT48917.2020.9214122 [retrieved on 2020-10-05]

## Description

The present invention relates to a portable device for the exchange, transfer and transport of sensitive digital information.

It is well known that nowadays approaching the digital world, especially the world of cryptocurrencies, involves having to deal with an onboarding process which is complex and not very intuitive.

In particular, in order to take possession of digital currency, the user can choose to buy it from an exchange or to buy it from another user.

In the first case, it is necessary to register and identify oneself on the exchange before being able to buy currency, and in both cases it is necessary to create and have available a personal wallet in order to receive the currency and subsequently use it.

There are currently three types of wallets available to users: digital wallets, physical wallets and burner wallets.

Digital wallets are wallets that can be accessed via a web or smartphone application, require an internet connection and can only be accessed and used via a PC or smartphone.

Physical wallets are physical devices similar to USB sticks which allow carrying your wallet with you. These are however so-called "cold" devices in that they act as physical repositories for digital currency and are not designed to display their contents independently, or to be exchanged in any way with other people, as they are very expensive. To access them, they need to be connected to a PC.

Burner wallets are "disposable" wallets which can be transferred in paper format.

However, the listed solutions have obvious issues that make the use of digital currency unviable, and they are only suitable for a small subset of possible use cases.

For instance, the digital wallets and the physical wallets have constraints mainly related to the need for Internet connection and energy sources.

Furthermore, known solutions are not suitable for use as a pledge in physical transactions (e.g. rental of an asset) or for the transport and univocal representation of an official document, because they do not guarantee univocal access to the contained information. Transporting and transmitting content is possible with the listed solutions but only for certain types of values (such as currencies) and with the limitations of use listed above.

Furthermore, with reference to burner wallets, it is possible to give several paper copies to several people, in effect transferring the same value several times (double spending).

Document AZMAN ET AL: "HCH DEX: A Secure Cryptocurrency e-Wallet & Exchange System with Two-way Authentication", THIRD INTERNATIONAL CONFERENCE ON SMART SYSTEMS AND INVENTIVE TECHNOLOGY (ICSSIT), IEEE, 20 August 2020 (2020-08-20), pages 305-310, XP033834925,DOI: 10.1109/ICSSIT48917.2020.9214122 discloses a secure cryptocurrency e-Wallet and exchange system with two way authentication.

Document US 2020/366483 A1 discloses devices and methods of managing data stored within a container, wherein the container may be associated with at least one registered user.

Document WO 2020/110079 A1 discloses a cryptocurrency token storage product to enable the storage of cryptocurrency tokens securely.

The main aim of the present invention is to provide a portable device for the exchange, transfer and transport of sensitive digital information, capable of solving the limitations and impediments currently affecting the solutions existing on the market, which allows collecting and storing information in a protected and encrypted way, guaranteeing the non-alterability of the content to the action of third parties.

Another object of the present invention is to provide a portable device for the exchange, transfer and transport of sensitive digital information, which allows strongly limiting the use of electricity and network connection for normal operation and content verification.

Another object of the present invention to provide a portable device for the exchange, transfer and transport of sensitive digital information which enables the power to control and manage the content of the device to be transferred from the user to the device itself.

Another object of the present invention is to provide a portable device for the exchange, transfer and transport of sensitive digital information which allows restricting access and also the retrieval of the digital content in a progressively more stringent manner.

The objects set out above are achieved by the present portable device for the exchange, transfer and transport of sensitive digital information according to claim 1.

Other characteristics and advantages of the present invention will become more apparent from the description of a preferred, but not exclusive, embodiment of portable device for the exchange, transfer and transport of sensitive digital information, illustrated by way of an indicative, yet non-limiting example, in the accompanying tables of drawings wherein:
Figure 1 is a general diagram of the portable device according to the invention;
Figure 2 schematically shows the operational states of the portable device according to the invention;
Figure 3 schematically shows possible examples of use of the portable device according to the invention.

With particular reference to such figures, reference numeral 1 globally indicates a portable device for the exchange, transfer and transport of sensitive digital information.

The portable device 1 according to the invention offers a universal, pocket-sized solution to the problem of exchanging, transferring and transporting digital information in a secure and accessible manner.

In particular, the portable device 1 allows anyone using it to transport, exchange, show, demonstrate and transfer sensitive digital information such as, for example, digital currency (cryptocurrencies), electronic personal documents (identity card, passport or the like), electronic tickets (plane ticket, train ticket, hotel ticket, concert ticket or the like).

Furthermore, the portable device 1 allows, compared to the current solutions in circulation, strongly limiting dependence on an energy source and restricting the need to use an Internet connection only for the verification operations of a produced demonstration.

Furthermore, the portable device 1 allows, under certain conditions, invalidating any content inside it, making it impossible for the owner to demonstrate the content and, at the same time, retrieve sensitive information, such as a digital document. This blocking and retrieval mechanism, delegated to competent authorities such as the police, council of judges or the judiciary, makes it possible to reduce and mitigate the consequences of the loss or theft of sensitive information contained in the device.

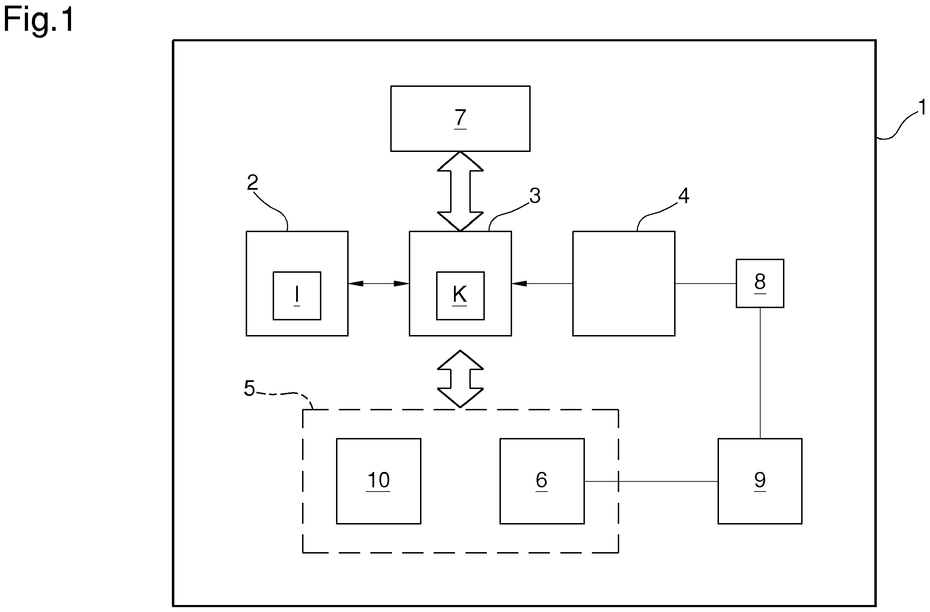

As schematically shown in Figure 1, the portable device 1 comprises at least one storage unit 2 of digital information I.

Such digital information I may comprise digital currency (cryptocurrencies), electronic personal documents (identity card, passport or the like), electronic tickets (plane ticket, train ticket, hotel ticket, concert ticket or the like).

Furthermore, the portable device 1 comprises an encryption unit 3 operatively connected to the storage unit 2 and containing at least one private key K of the wallet that the device represents, for encrypting this digital information I.

In particular, the encryption unit 3 preferably comprises a microchip.

All owners of the portable device 1, from the manufacturer of the microchip 3 to the end user, participate in the creation of the private key K and the relevant public key P.

The private key K is unknown to everyone and can be modified once the device 1 is unlocked.

In particular, the device 1 comprises modification means 4 configured to modify the private key K.

The process of changing the private key K associated with the wallet must be such as to guarantee the user that no one can know the generated private key and, at the same time, must also prevent the user who requested the generation from being able to know this key.

In particular, the modification means 4 are configured to perform at least the following steps:
- receive an incoming request to modify the existing private key OK;
- receive an incoming password from the user;
- starting from this password, produce a string of standard size, for example through a hashing algorithm;
- starting from the string produced, generate a private key UK, known and obtainable by the user;
- combine the generated private key UK with the existing private key OK on the device 1 (and known only by it), thus producing a new private key NK.

For example, the generated private key UK can be combined with the existing private key OK through an operation XOR, producing a new private key NK, which cannot be obtained by the user in any way.

At this point it is possible to demonstrate to the user that the password he or she used in the key change process actually contributed to the creation of the new private key NK, but without sharing either the previous private key or the newly-produced private key.

Among the mechanisms that make this process possible, the use is possible, e.g., of "Zero Knowledge Proofs", cryptographic protocols that allow an actor to prove the truthfulness of a statement, without having to reveal any information other than the truthfulness of the statement itself.

In this case, it is possible to use a ZKP to prove that the new generated private key NK to which a new public key NP is associated has been generated starting from the old private key OK, linked to the old public key OP and from a private key UK generated starting from the hash of the password entered by the user, without however sharing the information of the new generated private key NK and of the old private key OK.

The device, which knows all the information mentioned, acts as a "prover" and carries out a test with "selective disclosure" of the information in its possession. In particular, the modification means 4 are configured to perform at least the following steps:
- mask the old private key OK and the generated private key NK, and
- disclose the old public key OP and the new public key NP, demonstrating that the password entered by the user was actually used in the generation of the new private key NK.

At the end of this process, the modification means 4 are configured to move all the contents of the wallet linked to the old OK key, and to transfer this content to the wallet linked to the new private key NK, subsequently destroying the old private key OK.

This setting ensures that no one knows the private key NK of the portable device 1, and therefore no one can impersonate it, by replacing it. Only the portable device 1 can sign content and transactions, thus guaranteeing their integrity.

The portable device 1 further comprises user interface means 5 comprising an e-ink technology screen 6 (electronic paper or electronic ink).

The use of such an e-ink technology screen 6 allows a minimum use of energy resources. In fact, this technology allows images to be displayed on a screen that is entirely similar to a sheet of paper, and to maintain these images over time, at a negligible energy cost.

The portable device 1 also comprises at least one short-range wireless transceiver unit 7.

According to a preferred embodiment, the transceiver unit 7 is composed of a Near-Field Communication (NFC) circuit.

This way, the portable device 1 is able to communicate with any other device implementing the same technology.

At the same time, the NFC circuit 7 does not need to be powered and the portable device 1 can receive through this NFC circuit the energy necessary to power the circuits and carry out the computation operations necessary for operation.

Therefore, the portable device 1 comprises a microchip 3 provided with technologies enabling secure computation (e.g., TrustZone for ARMv8-M microchips). With this equipment, the portable device 1 is able to isolate the hardware component ensuring secure software execution, providing secure computation and storage capabilities.

An NFC circuit 7 and an e-ink technology screen 6 are operationally connected to the microchip 3.

The NFC circuit 7 is required to enable easy wireless connection of the portable device 1 to a smart-phone or to other examples of the device itself, so as to enable synchronization and data exchange.

The e-ink technology screen 6, on the other hand, allows digital information I which the portable device 1 "contains" to be displayed graphically, from currencies to information and documents.

The e-ink technology screen 6 has a negligible energy footprint while the NFC circuit 7 can be powered by the additional device with which it has to communicate and to which it is approached. The portable device 1 does not therefore necessarily need a battery to operate.

Preferably, the device comprises an internal clock 8, so that a reliable time reference can always be had.

Furthermore, the portable device 1 comprises a small power supply battery 9 connected to the e-ink screen 6 and to the internal clock 8.

Furthermore, according to a possible embodiment of the portable device 1, the user interface means 5 comprise a series of programmable buttons 10, which allow interacting with the device and setting different modes of operation, such as content loading/unloading or reading different "pages" of content.

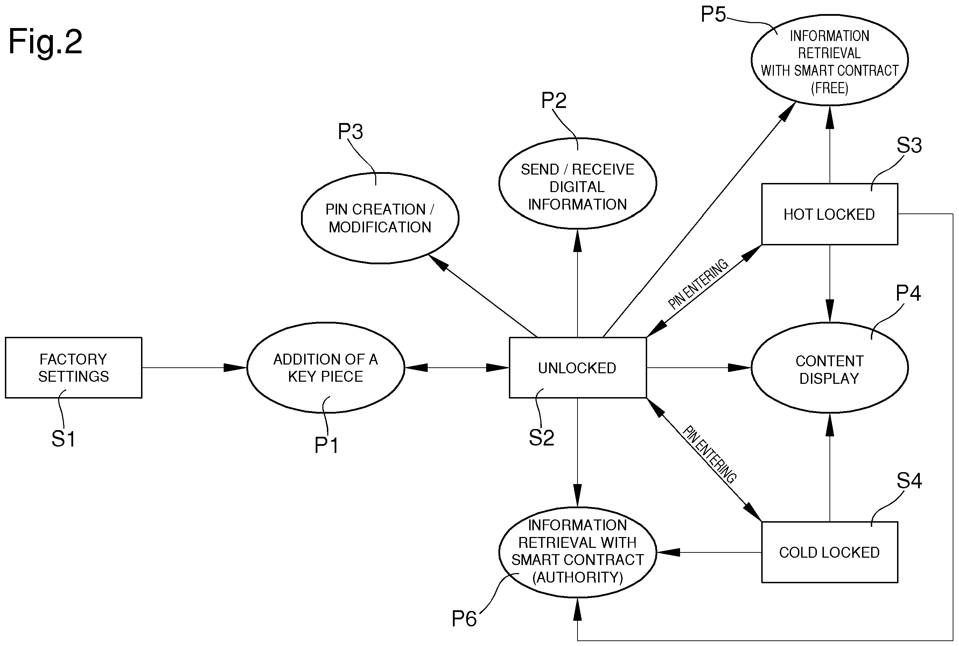

The operating states of the portable device 1 are schematically shown in Figure 2.

Advantageously, the portable device 1 is configured to operate alternately in at least the following predefined states:
- factory setting (S1): in this state, the portable device 1 has never been used and is configured to be activated by generating a new private key NK starting from the private key OK stored in the storage unit 2 (step P1);
- unlocked (S2): in this state, the portable device 1 is operational and can receive and exchange digital information I (step P2), can change owner, and therefore create a new private key NK (step P1), change the unlock PIN (step P3);
- hot locked (S3): in this state, the portable device 1 cannot exchange digital information I but can display and demonstrate the digital information I it contains (step P4); moreover, through a smart contract to which it is connected it can transfer the contained digital information I, respecting the predefined rules by the smart contract (step P5);
- cold locked (S4): in this state, the portable device 1 cannot exchange digital information I, nor can it be freely retrieved by the owner, it is only possible to display and demonstrate the digital information it contains (step P4).

Furthermore, the portable device 1 is configured to be associated with one or more "guarantor" identities which, should the device be lost or misappropriated by a third party, jointly have the ability to govern the contents of the device itself, possibly emptying or diverting it to other devices or wallets (step P6).

Therefore, once in possession of the portable device 1, any user has several use cases available to them.

For example, a user can carry the portable device 1 with him or her in his or her wallet or pocket, like a normal credit card or token, he or she can show its contents to other users or authorities, displaying sensitive documents such as identity documents, boarding passes or reservations, but also simple currency. He or she can also decide to exchange all or part of his or her currency by bringing the portable device 1 closer to a smartphone, reader or other device.

All the operations listed above can be performed without the need for a network connection.

The user also has the option of physically transferring the portable device 1, and in so doing also its entire contents, to third parties as a form of payment, loan, pledge or evidence of any kind.

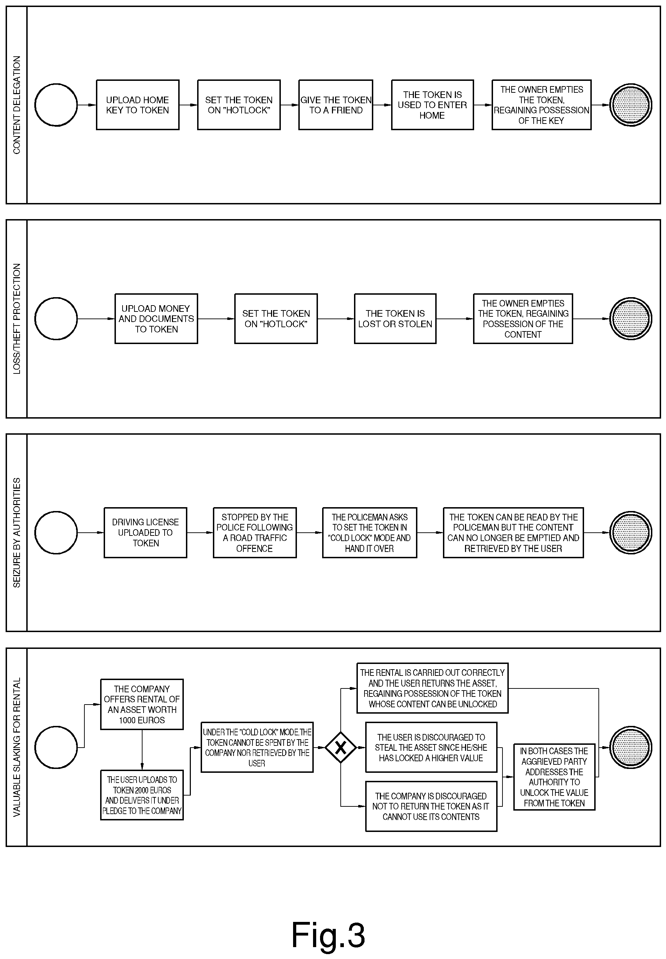

Possible use cases are illustrated by way of example in Figure 3. In accordance with the invention, the portable device 1 is configured to perform verification operations and demos of the operation carried out by means of a reference blockchain.

Thus, at the address of the portable device 1, it is possible to verify all transaction operations as well as the current documents and currencies on the device itself.

The portable device 1 can also be configured to communicate with a dedicated smart-phone app which is capable of dialogue, can be used by the owner, as well as any other person, without the need to purchase the item in question. Through this app, the portable device 1 can share the operations carried out during the period in which it was disconnected from the network and thus synchronize all the operations carried out on the reference blockchain.

It has in practice been ascertained that the described invention achieves the intended objects.

In particular, the fact is underlined that the devised portable device solves the limitations and impediments that currently affect the existing solutions on the market, making it possible to collect and store information in a protected and encrypted way, ensuring the non-alterability of the content to the action of third parties.

At the same time, the portable device according to the invention aims to use the most modern technologies to strongly limit the use of electricity and network connection in order to be able to operate and verify its content. The mechanisms of information protection and secrecy of the private key of the device allow transferring the power of control and management of the content of the device from the user to the device itself.

Furthermore, by means of certain locking states, it is possible to restrict access to and even retrieval of the digital content of the portable device in an increasingly stringent manner. By so doing, it is also possible to contain sensitive documents, link the certificate of ownership and the access key to an asset, or even block the value to transfer it under pledge to a third party. Furthermore, the contained documents can be confiscated by the competent authorities.

## Claims

1. Portable device (1) for the exchange, transfer and transport of sensitive digital information, comprising:
- at least one storage unit (2) of digital information (I);
- an encryption unit (3) operatively connected to said storage unit (2) and containing at least one private key (K) for encrypting this digital information (I);
- modification means (4) configured to modify said private key (K);
- wherein said portable device (1) is configured to perform verification operations and demos of all the operations carried out by means of a reference blockchain;
**characterized by** the fact that said modification means (4) are configured to perform at least the following steps:
- receive an incoming request to modify said existing private key (OK);
- receive an incoming password from a user;
- starting from said password, generate a private key (UK), known and obtainable by the user;
- combine said generated private key (UK) with said existing private key (OK), producing a new private key (NK).

2. Portable device (1) according to claim 1, **characterized by** the fact that said modification means (4) are configured to perform at least the following steps:
- mask said old private key (OK) and said new private key (NK), and
- disclose said old public key (OP) and said new public key (NP), demonstrating that the password entered by the user was actually used in the generation of the new private key (NK).

3. Portable device (1) according to one or more of the preceding claims, **characterized by** the fact that said digital information (I) comprises at least one of: digital currency, electronic personal documents, electronic tickets.

4. Portable device (1) according to one or more of the preceding claims, **characterized by** the fact that it comprises user interface means (5) provided with a low-consumption technology screen (6).

5. Portable device (1) according to claim 4, **characterized by** the fact that said low-consumption technology screen (6) is an e-ink technology screen (6).

6. Portable device (1) according to one or more of the preceding claims, **characterized by** the fact that it comprises at least one short-range wireless transceiver unit (7).

7. Portable device (1) according to claim 6, **characterized by** the fact that said transceiver unit (7) comprises a Near-Field Communication (NFC) circuit.

8. Portable device (1) according to one or more of the preceding claims, **characterized by** the fact that it comprises an internal clock (8).

9. Portable device (1) according to one or more of the preceding claims, **characterized by** the fact that it comprises a power supply battery (9) connected to said e-ink screen (6) and to said internal clock (8).

10. Portable device (1) according to one or more of the preceding claims, **characterized by** the fact that said user interface means (5) comprise a series of programmable buttons (10).

11. Portable device (1) according to one or more of the preceding claims, **characterized by** the fact that it is configured to operate alternately at least in the following predefined states:
- factory setting (S1): in this state, the portable device (1) has never been used and is configured to be activated by generating a new private key (NK) starting from the private key (OK) stored in the storage unit (2) (step P1);
- unlocked (S2): in this state, the portable device (1) is operational and is configured to receive and exchange digital information (I) (step P2), to change owner, and therefore create a new private key (NK) (step P1), change the unlock PIN (step P3);
- hot locked (S3): in this state, the portable device (1) is configured to not exchange digital information (I), to display and demonstrate the digital information (I) it contains (step P4) and, through a smart contract to which it is connected, to transfer the contained digital information (I), respecting the predefined rules by the smart contract (step P5);
- cold locked (S4): in this state, the portable device (1) is configured to only display and demonstrate the digital information (I) it contains (step P4).

## Patentansprüche

1. Tragbare Vorrichtung (1) für den Austausch, die Übertragung und den Transport von sensiblen digitalen Informationen, umfassend:
- mindestens eine Speichereinheit (2) für digitale Informationen (1),
- eine Verschlüsselungseinheit (3), die mit der genannten Speichereinheit (2) operativ verbunden ist und mindestens einen privaten Schlüssel (K) zum Verschlüsseln dieser digitalen Informationen (1) enthält,
- Änderungsmittel (4), die zum Ändern des privaten Schlüssels (K) ausgebildet sind;
- wobei die tragbare Vorrichtung (1) ausgebildet ist, Verifizierungsoperationen und Demos aller mittels einer Referenz-Blockchain durchgeführten Operationen auszuführen;
**dadurch gekennzeichnet, dass** die Änderungsmittel (4) ausgebildet sind, mindestens die folgenden Schritte auszuführen:
- Empfangen einer eingehenden Anfrage zur Änderung des bestehenden privaten Schlüssels (OK);
- Empfangen eines eingehenden Passworts von einem Benutzer;
- ausgehend von diesem Passwort Erzeugen eines privaten Schlüssels (UK), der dem Benutzer bekannt und zugänglich ist;
- Kombinieren des erzeugten privaten Schlüssels (UK) mit dem bestehenden privaten Schlüssel (OK), wodurch ein neuer privater Schlüssel (NK) erzeugt wird.

2. Tragbare Vorrichtung (1) nach Anspruch 1, **dadurch gekennzeichnet, dass** die Änderungsmittel (4) ausgebildet sind, mindestens die folgenden Schritte auszuführen:
- Maskieren des alten privaten Schlüssels (OK) und des neuen privaten Schlüssels (NK), und
- Offenlegung des alten öffentlichen Schlüssels (OP) und des neuen öffentlichen Schlüssels (NP), wobei nachgewiesen wird, dass das von dem Benutzer eingegebene Passwort tatsächlich für die Erzeugung des neuen privaten Schlüssels (NK) verwendet wurde.

3. Tragbare Vorrichtung (1) nach einem oder mehreren der vorhergehenden Ansprüche, **dadurch gekennzeichnet, dass** die digitalen Informationen (1) mindestens eines der folgenden Elemente umfasst: digitale Währung, elektronische persönliche Dokumente, elektronische Tickets.

4. Tragbare Vorrichtung (1) nach einem oder mehreren der vorhergehenden Ansprüche, **dadurch gekennzeichnet, dass** sie Benutzerschnittstellenmittel (5) umfasst, die mit einem Bildschirm (6) mit verbrauchsarmer Technologie versehen sind.

5. Tragbare Vorrichtung (1) nach Anspruch 4, **dadurch gekennzeichnet, dass** der Bildschirm (6) mit verbrauchsarmer Technologie ein Bildschirm (6) mit E-Ink-Technologie ist.

6. Tragbare Vorrichtung (1) nach einem oder mehreren der vorhergehenden Ansprüche, **dadurch gekennzeichnet, dass** sie mindestens eine drahtlose Sende-/ Empfangseinheit (7) mit kurzer Reichweite umfasst.

7. Tragbare Vorrichtung (1) nach Anspruch 6, **dadurch gekennzeichnet, dass** die Sende-/ Empfangseinheit (7) eine Nahfeldkommunikations-(NFC-) Schaltung umfasst.

8. Tragbare Vorrichtung (1) nach einem oder mehreren der vorhergehenden Ansprüche, **dadurch gekennzeichnet, dass** sie eine interne Uhr (8) umfasst.

9. Tragbare Vorrichtung (1) nach einem oder mehreren der vorhergehenden Ansprüche, **dadurch gekennzeichnet, dass** sie eine Batterie (9) zur Energieversorgung umfasst, die mit dem E-Ink-Bildschirm (6) und der internen Uhr (8) verbunden ist.

10. Tragbare Vorrichtung (1) nach einem oder mehreren der vorangehenden Ansprüche, **dadurch gekennzeichnet, dass** die Benutzerschnittstellenmittel (5) eine Reihe von programmierbaren Tasten (10) umfassen.

11. Tragbare Vorrichtung (1) nach einem oder mehreren der vorhergehenden Ansprüche, **dadurch gekennzeichnet, dass** sie ausgebildet ist, abwechselnd mindestens in den folgenden vordefinierten Zuständen zu arbeiten:
- Werkseinstellung (S1): in diesem Zustand wurde die tragbare Vorrichtung (1) noch nie benutzt und ist ausgebildet, durch Erzeugung eines neuen privaten Schlüssels (NK) ausgehend von dem in der Speichereinheit (2) gespeicherten privaten Schlüssel (OK) aktiviert zu werden (Schritt P1);
- entsperrt (S2): in diesem Zustand ist die tragbare Vorrichtung (1) betriebsbereit und ausgebildet, digitale Informationen (1) zu empfangen und auszutauschen (Schritt P2), den Besitzer zu wechseln und daher einen neuen privaten Schlüssel (NK) zu erzeugen (Schritt P1), die Entsperr-PIN zu ändern (Schritt P3);
- hot locked (S3): in diesem Zustand ist die tragbare Vorrichtung (1) ausgebildet, keine digitalen Informationen (1) auszutauschen, die digitalen Informationen (1), die sie enthält, anzuzeigen und auszugeben (Schritt P4) und über einen intelligenten Vertrag, mit dem sie verbunden ist, die enthaltenen digitalen Informationen (1) unter Einhaltung der durch den intelligenten Vertrag vorgegebenen Regeln zu übertragen (Schritt P5);
- cold locked (S4): in diesem Zustand ist die tragbare Vorrichtung (1) ausgebildet, nur die digitalen Informationen (1), die sie enthält, anzuzeigen und auszugeben (Schritt P4).

## Revendications

1. - Dispositif portable (1) pour l'échange, le transfert et le transport d'informations numériques sensibles, comprenant :
- au moins une unité de stockage (2) d'informations numériques (I) ;
- une unité de chiffrement (3) connectée de manière fonctionnelle à ladite unité de stockage (2) et contenant au moins une clé privée (K) pour chiffrer ces informations numériques (I) ;
- des moyens de modification (4) configurés pour modifier ladite clé privée (K) ;
- dans lequel ledit dispositif portable (1) est configuré pour réaliser des opérations de vérification et des démonstrations de toutes les opérations réalisées au moyen d'une chaîne de blocs de référence ;
**caractérisé par le fait que** lesdits moyens de modification (4) sont configurés pour réaliser au moins les étapes suivantes :
- recevoir une demande entrante de modification de ladite clé privée existante (OK) ;
- recevoir un mot de passe entrant en provenance d'un utilisateur ;
- à partir dudit mot de passe, générer une clé privée (UK), connue et apte à être obtenue par l'utilisateur ;
- combiner ladite clé privée générée (UK) avec ladite clé privée existante (OK), produisant une nouvelle clé privée (NK) .

2. - Dispositif portable (1) selon la revendication 1, **caractérisé par le fait que** lesdits moyens de modification (4) sont configurés pour réaliser au moins les étapes suivantes :
- masquer ladite ancienne clé privée (OK) et ladite nouvelle clé privée (NK), et
- divulguer ladite ancienne clé publique (OP) et ladite nouvelle clé publique (NP), démontrant que le mot de passe entré par l'utilisateur a effectivement été utilisé lors de la génération de la nouvelle clé privée (NK).

3. - Dispositif portable (1) selon une ou plusieurs des revendications précédentes, **caractérisé par le fait que** lesdites informations numériques (I) comprennent au moins un parmi : une monnaie numérique, des documents personnels électroniques, des billets électroniques.

4. - Dispositif portable (1) selon une ou plusieurs des revendications précédentes, **caractérisé par le fait qu'**il comprend des moyens d'interface utilisateur (5) ayant un écran de technologie à basse consommation (6).

5. - Dispositif portable (1) selon la revendication 4, **caractérisé par le fait que** ledit écran de technologie à basse consommation (6) est un écran de technologie à encre électronique (6).

6. - Dispositif portable (1) selon une ou plusieurs des revendications précédentes, **caractérisé par le fait qu'**il comprend au moins une unité d'émetteur-récepteur sans fil à courte portée (7).

7. - Dispositif portable (1) selon la revendication 6, **caractérisé par le fait que** ladite unité d'émetteur-récepteur (7) comprend un circuit de communication en champ proche (NFC) .

8. - Dispositif portable (1) selon une ou plusieurs des revendications précédentes, **caractérisé par le fait qu'**il comprend une horloge interne (8).

9. - Dispositif portable (1) selon une ou plusieurs des revendications précédentes, **caractérisé par le fait qu'**il comprend une batterie d'alimentation électrique (9) connectée audit écran à encre électronique (6) et à ladite horloge interne (8).

10. - Dispositif portable (1) selon une ou plusieurs des revendications précédentes, **caractérisé par le fait que** lesdits moyens d'interface utilisateur (5) comprennent une série de boutons programmables (10).

11. - Dispositif portable (1) selon une ou plusieurs des revendications précédentes, **caractérisé par le fait qu'**il est configuré pour fonctionner alternativement au moins dans les états prédéfinis suivants :
- réglage d'usine (S1) : dans cet état, le dispositif portable (1) n'a jamais été utilisé et est configuré pour être activé en générant une nouvelle clé privée (NK) à partir de la clé privée (OK) stockée dans l'unité de stockage (2) (étape P1) ;
- déverrouillé (S2) : dans cet état, le dispositif portable (1) est opérationnel et est configuré pour recevoir et échanger des informations numériques (I) (étape P2), changer de propriétaire et ainsi créer une nouvelle clé privée (NK) (étape P1), changer le code PIN de déverrouillage (étape P3) ;
- verrouillé à chaud (S3) : dans cet état, le dispositif portable (1) est configuré pour ne pas échanger d'informations numériques (I), pour afficher et démontrer les informations numériques (I) qu'il contient (étape P4) et, par l'intermédiaire d'un contrat intelligent auquel il est connecté, pour transférer les informations numériques (I) contenues, en respectant les règles prédéfinies par le contrat intelligent (étape P5) ;
- verrouillé à froid (S4) : dans cet état, le dispositif portable (1) est configuré pour uniquement afficher et démontrer les informations numériques (I) qu'il contient (étape P4).
